Europäisches Patentamt

European Patent Office

Office européen des brevets

(19)

(11) **EP 0 692 373 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(51) Int. Cl.$^6$: **B32B 27/32**

(21) Anmeldenummer: **95109716.1**

(22) Anmeldetag: **22.06.1995**

(54) **Peelfähige, siegelbare polyolefinische Mehrschichtfolie**

Peelable, sealable polyolefin laminate

Feuille multicouche pelable et scellable en polyoléfine

(84) Benannte Vertragsstaaten:
**BE DE DK ES FR GB IT NL SE**

(30) Priorität: **13.07.1994 DE 4424604**

(43) Veröffentlichungstag der Anmeldung:
**17.01.1996 Patentblatt 1996/03**

(73) Patentinhaber:
**Hoechst Trespaphan GmbH**
**66539 Neunkirchen (DE)**

(72) Erfinder:
• **Schreck, Michael**
  **D-60529 Frankfurt (DE)**

• **Dries, Thomas**
  **D-55270 Schwabenheim (DE)**
• **Murschall, Ursula**
  **D-55283 Nierstein (DE)**
• **Scheidecker, Dieter**
  **D-65343 Eltville (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
EP-A- 0 517 109          DE-U- 8 612 789
US-A- 4 582 736

**Beschreibung**

Die vorliegende Erfindung betrifft eine peelfähige, orientierte, opake Polyolefin-Mehrschichtfolie aus mindestens einer opaken Schicht und einer peelfähigen Deckschicht.

Die Erfindung betrifft ferner ein Verfahren zur Herstellung der peelfähigen Mehrschichtfolie sowie ihre Verwendung.

Polyolefinfolien finden als Verpackungsfolien breite Anwendung. Der Erfolg dieser Materialien beruht auf den guten optischen und mechanischen Eigenschaften sowie auf der einfachen Verschweißbarkeit der Folien. Neben dem Verschweissen hat das Siegeln von Folien zunehmend an Bedeutung gewonnen. Siegelfähige Folien besitzen bevorzugt eine Deckschicht aus einem Polymeren, das einen niedrigeren Kristallitschmelzpunkt besitzt als das Polymere der Basisschicht der Folie. Zum Siegeln werden die Folienlagen übereinandergelegt und nur 10 bis 20 °C unter den Kristallitschmelzpunkt erwärmt, d. h. die Deckschichten werden nicht vollständig aufgeschmolzen. Die erzielte Haftung der Siegelschichten ist wesentlich geringer als beim Verschweissen des gleichen Materials, jedoch für viele Anwendungen ausreichend (Kunststoff-Handbuch, Band IV, Car Hanser Verlag München, 1969, Seiten 623 bis 640).

Die Siegelnähte haben in vielen Fällen eine höhere mechanische Festigkeit als die Folien selbst, so daß beim Öffnen einer versiegelten Folienpackung diese nicht nur in der Siegelnaht aufgerissen und zerstört wird, sondern vielmehr der Riß sich in der Folie selbst fortsetzt und dann unkontrolliert weiterreißt. Ein solches Öffnen der Naht nennt man Kohäsionsbruch. Aus diesem Grund werden anstelle von siegelfähigen Rohstoffen auch sogenannte peelfähige Deckschichten auf Folienoberflächen aufgebracht. Die peelfähigen Deckschichten bieten einerseits gute Siegeleigenschaften, aber gleichzeitig auch die Möglichkeit, die Siegelnaht wieder kontrolliert zu öffnen, ohne die gesiegelten Materialien zu zerstören.

Die US-A-4,666,778 beschreibt transparente, peelfähige Folien mit einer guten Siegelnahtfestigkeit und mit einer niedrigen Trübung. Die peelfähige Deckschicht besteht aus einem Polymergemisch aus ethylenischen Polymeren oder ethylenischen Copolymeren mit geringen Mengen von Propylenpolymeren und Butylenpolymeren. Die gute Transparenz der Folien ist für manche Anwendungszwecke günstig, aber nicht immer erwünscht.

Peelfähige Rohstoffe sind im Stand der Technik bekannt. Beispielsweise beschreibt das Produktdatenblatt "Novolen VP 9201" ein olefinisches Polymeres, welches zur Herstellung von peelbaren, coextrudierten Siegelschichten auf Polypropylenfolien geeignet ist. Die Siegel-/Peelschichten sind glänzend bis seidenmatt und werden vorwiegend auf pigmentierten/opaken Trägerschichten verwendet.

Im Stand der Technik sind auch nicht transparente, sogenannte opake oder transluzente Folien bekannt, welche je nach der aufgebrachten Deckschicht, siegelfähig oder nicht siegelfähig sein können.

Opake Folien enthalten in mindestens einer Schicht Pigmente oder vakuoleniniziierende Teilchen bzw. eine Kombination aus diesen, wodurch die Folien im Vergleich zu transparenten Folien eine deutlich reduzierte Lichtdurchlässigkeit haben. "Opake Folie" bedeutet im Sinne der vorliegenden Erfindung eine undurchsichtige Folien, deren Lichtdurchlässigkeit nach ASTM D 1003-77 höchstens 70, vorzugsweise höchstens 50 %, beträgt.

Vakuoleniniziierende Teilchen sind Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 0,02 bis 10 $\mu$m.

Die EP-A-0 083 495 beschreibt eine opake, biaxial orientierte Folie mit satiniertem Aussehen und einem Oberflächenglanz von größer als 100 %, die mindestens einen kugelförmigen Feststoffpartikel je Vakuole enthält. Des weiteren umfaßt die Folie auf beiden Oberflächen der Kernschicht eine porenfreie, transparente, thermoplastische Mantelschicht, die eine die Optik der Folie bestimmende Dicke aufweist. Als Material für den Feststoffpartikel wird z. B. Nylon angegeben. Die Teilchen haben in der Regel einen Durchmesser, der größer als 1 $\mu$m ist. Auch bei dieser Folie wird die Opazität hauptsächlich durch die Menge der Feststoffpartikel und die Verfahrensparameter bei der biaxialen Orientierung bestimmt.

Die EP-A-0 475 110 beschreibt biaxial orientierte weiße Folien mit einer Trägerschicht auf Basis von Polypropylenpolymeren und ein- oder beidseitigen Deckschichten. Die Trägerschicht enthält beschichtete $TiO_2$-Teilchen, deren Beschichtung mindestens ein anorganisches Oxid und mindestens eine organische Verbindung aufweist. Die Folien zeichnen sich durch gute mechanische Eigenschaften und einen hohen und dauerhaften Weißgrad aus.

Die EP-A-0 538 747 beschreibt biaxial orientierte Polypropylenfolien mit einer matten Deckschicht. Die Deckschicht besteht aus Propylenco- und/oder -terpolymeren und einem HDPE. Die Folien zeichnen sich durch einen geringen Glanz und eine hohe Trübung aus, wodurch das matte Erscheinungsbild gewährleistet wird.

Die EP-A-0 367 613 beschreibt eine opake Folie mit einer vakuolenhaltigen Schicht und einer Deckschicht mit einer rauhen, beschriftbaren Oberfläche. Die Deckschicht enthält ein erstes Polymer mit einem MFI von $\leq$1 g/10 min und ein zweites Polymer, welches mit dem ersten unverträglich ist.

2

Die EP-A-0 517 109 beschreibt eine mehrschichtige weiße, biaxial orientierte Polypropylenfolie. Die Folie besitzt wenigstens einen dreischichtigen Aufbau und umfaßt: eine Basisschicht aus Propylenpolymeren enthaltend bis zu 2 Gew.-% Calciumcarbonat mit einer mittleren Teilchengröße bis höchstens 2,0 µm und 0 bis 25 Gew.-% Titandioxid, eine Zwischenschicht aus Propylenpolymeren enthaltend 0 bis 25 Gew.-% Titandioxid, bezogen auf das Gesamtgewicht der Zwischenschicht, und eine Deckschicht aus Siegelrohstoff. Diese Folie enthält insgesamt in der Basisschicht und/oder der Zwischenschicht wenigstens 2 Gew.-% Titandioxid.

Die Aufgabe der vorliegenden Erfindung bestand darin, eine opake, peelfähige Folie zur Verfügung zu stellen. Insbesondere soll sich die Folie durch eine Kombination der folgenden Eigenschaften auszeichnen:

- eine hohe Opazität
- einen hohen Weißgrad
- gute Peeleigenschaften
- gute Siegelnahtfestigkeit
- gute Hot-Tack-Eigenschaften
- hohe Lichtabsorption im UV-Bereich
- niedrige Siegelanspringtemperatur
- gute Siegelfähigkeit gegenüber Propylenhomopolymeren

Die der Erfindung zugrundeliegende Aufgabe wird gelöst durch eine Mehrschichtfolie der eingangs genannten Gattung, deren kennzeichnende Merkmale darin bestehen, daß alle Schichten der Folie vakuolenfrei sind und die opake Schicht Pigmente mit einem mittleren Teilchendurchmesser von 0,01 bis 1 µm enthält.

Die opake Schicht der erfindungsgemäßen Mehrschichtfolie enthält im wesentlichen ein Polyolefin, vorzugsweise ein Propylenpolymer, und opak machende Pigmente. Im allgemeinen enthält die opake Schicht mindestens 50 Gew.-%, vorzugsweise 60 bis 99 Gew.-%, insbesondere 70 bis 98 Gew.-%, des Polyolefins, jeweils bezogen auf das Gewicht der opaken Schicht.

Als Polyolefine sind Propylenpolymere bevorzugt. Das Propylenpolymere enthält 90 bis 100 Gew.-%, vorzugsweise 95 bis 100 Gew.-%, insbesondere 98 bis 100 Gew.-%, Propylen und besitzt einen Schmelzpunkt von 120 °C oder höher, vorzugsweise 150 bis 170 °C, und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und/oder anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE, VLDPE und LLDPE, wobei der Anteil dieser Polyolefine jeweils 15 Gew.-%, bezogen auf die Polymermischung, nicht übersteigt.

Erfindungsgemäß enthält die opake Schicht der Folie opazifierende, d. h. opak machende, Pigmente in einer Menge von maximal 40 Gew.-%, vorzugsweise 1 bis 30 Gew.-%, insbesondere 2 bis 20 Gew.-%, bezogen auf das Gewicht der opaken Schicht. Es ist unbedingt notwendig, daß die Pigmente im wesentlichen keine Vakuolen iniziieren, da die opake Schicht erfindungsgemäß vakuolenfrei sein muß.

Das bedeutet, daß Pigmente im Sinne der vorliegenden Erfindung unverträgliche Teilchen sind, die im wesentlichen nicht zur Vakuolenbildung beim Verstrecken der Folie führen. Die färbende Wirkung der Pigmente wird durch die Teilchen selbst verursacht. Damit die Pigmente keine Vakuolen erzeugen, müssen sie einen mittleren Teilchendurchmesser im Bereich von 0,01 bis maximal 1 µm aufweisen. Der Begriff "Pigmente" umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Es ist erfindungswesentlich, daß weder die opake Schicht noch eine andere Schicht der Folie eine vakuolenhaltige Struktur hat, d. h. die gesamte Folie muß im wesentlichen vakuolenfrei sein. Es wurde gefunden, daß eine vakuolenhaltige Folie mit einer peelfähigen Deckschicht als peelfähiges Verpackungsmaterial völlig ungeeignet ist. Die Schichtstruktur delaminiert und die gewünschte kontrollierte Öffnung der Siegelnähte ist nicht möglich. Überraschenderweise erhält man das gewünschte opake Aussehen und die notwendige Delaminierungsfestigkeit einer peelbaren Opakfolie, wenn einer Schicht der Folie nur opak machende Pigmente mit einem mittleren Teilchendurchmesser von 0,01 bis 1 $\mu$m zugesetzt werden, welche keine Vakuolen erzeugen.

Die erfindungsgemäße Mehrschichtfolie umfaßt gegebenenfalls (eine) weitere zwischen der opaken und der Deckschicht aufgebrachte Zwischenschicht/en.

Diese gegebenenfalls vorhandene/n Zwischenschicht/en enthält/enthalten im wesentlichen Propylenpolymere oder Polypropylenmischungen, wie sie vorstehend für die opake Schicht beschrieben wurden. Grundsätzlich können die opake Schicht und die Zwischenschicht/en aus gleichen oder verschiedenen Propylenpolymeren bzw. Mischungen aufgebaut sein. Die Schmelzflußindices der Polymeren für die opake und Zwischenschicht/en sollen möglichst gleich groß sein. Gegebenenfalls kann der MFI der Zwischenschicht/en etwas höher liegen, wobei eine Differenz von 20 % nicht überschritten werden soll. Gegebenenfalls können den Zwischenschichten Additive in jeweils wirksamen Mengen zugesetzt werden, wobei jedoch keine vakuoleniniziierenden Teilchen enthalten sein dürfen.

In einer weiteren vorteilhaften Ausführungsform werden die in der opaken Schicht und/oder Zwischenschicht eingesetzten Propylenpolymeren durch den Zusatz von organischen Peroxiden teilabgebaut. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ =    Schmelzflußindex des Propylenpolymers vor dem Zusatz des organischen Peroxids  
$MFI_2$ =    Schmelzflußindex des peroxidisch abgebauten Propylenpolymeren

Erfindungsgemäß liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Folie umfaßt neben der opaken Schicht mindestens eine peelfähige Deckschicht. Die Deckschicht ist im Sinne der vorliegenden Erfindung eine außenliegende Schicht, so daß die äußere Oberfläche der Deckschicht eine der beiden Folienoberflächen bildet.

Die peelfähige Deckschicht der erfindungsgemäßen Mehrschichtfolie enthält eine im folgenden näher beschriebene Mischung bzw. ein Blend aus zwei unverträglichen Polymeren (Komponenten I und II) und gegebenenfalls zugesetzte Additive. "Unverträglich" bedeutet im Sinne der vorliegenden Erfindung, daß beide Komponenten zwei getrennt vorliegende Phasen bilden. Im allgemeinen enthält die Deckschicht mindestens 70 Gew.-%, vorzugsweise 75 bis 100 Gew.-%, insbesondere 90 bis 98 Gew.-%, der besagten Mischung. Die vorstehenden Angaben in Gew.-% beziehen sich auf das Gewicht der Deckschicht.

Die Komponente I der peelfähigen Deckschichtmischung bzw. des Blends ist im wesentlichen

ein Propylenhomopolymer oder  
ein Copolymer von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymer von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit
einem oder mehreren der genannten Homo-, Co- und Terpolymeren.

Besonders bevorzugt besteht die Komponente I im wesentlichen aus

einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren
oder aus
einem Blend aus zwei oder mehreren der genannten besonders bevorzugten Homo-, Co- und Terpolymeren, gegebenenfalls gemischt mit
einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends, bevorzugt sind.

Das als oder in der Komponente I eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Komponente I bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Die vorstehend beschriebenen Copolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Die in der/den Schichten eingesetzten Terpolymeren haben einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Andere Schichten aus Co- und/oder Terpolymeren bilden vorzugsweise die Deckschichten von siegelfähigen Ausführungsformen der Folie.

Die Komponente II der peelfähigen Deckschichtmischung ist ein mit den vorstehend beschriebenen olefinischen Polymeren unverträgliches Polymer, das überwiegend aus Ethylensequenzen aufgebaut ist. "Unverträgliches Polymer" bedeutet im Sinne der vorliegenden Erfindung, daß das unverträgliche Polymer als separate Phase neben dem olefinischen Polymer vorliegt. Bevorzugt sind HDPE, MDPE, LDPE, LLDPE, VLDPE. Im allgemeinen enthalten diese Ethylenpolymeren einen geringen Anteil von < 10 Gew.-%, vorzugsweise 1 bis 8 Gew.-%, Comonomer. Als Comonomere sind Olefine mit 3 bis 10 C-Atomen geeignet, wobei Propen, 1-Buten und/oder 1-Hexen als Comonomere bevorzugt sind.

Das Blend zeigt in einem mittels DSC aufgenommenen Schmelzdiagramm zwei separate Schmelzpeaks. Der erste Schmelzpeak liegt im Bereich von 105 bis 135 °C, der zweite Schmelzpeak liegt im Bereich von 120 bis 140 °C.

Das Verhältnis (Gewichtsverhältnis) der beiden unverträglichen Polymeren I und II der Deckschichtmischung bzw. des Blends kann je nach der gewünschten Peelkraft innerhalb weiter Grenzen variieren. Bevorzugt liegt das Verhältnis der Komponenten I und II in einem Bereich von I:II = 5:95 bis I:II = 95:5, vorzugsweise zwischen I:II = 30:70 bis I:II = 70:30, insbesondere bei I:II = 50:50.

Die erfindungsgemäße Folie ist mindestens zweischichtig und umfaßt als wesentliche Schichten immer die opake Schicht und zumindest eine peelfähige Deckschicht, vorzugsweise beidseitig Deckschichten, welche gleich oder verschieden sein können. Die Auswahl der Anzahl der Schichten hängt in erster Linie von dem vorgesehenen Einsatzzweck ab, wobei drei-, vier- und fünfschichtige Ausführungsformen besonders bevorzugt sind. Insbesondere ist ein vierschichtiger Aufbau bevorzugt, bei welchem die opake Schicht die Basisschicht der Folie bildet. Auf einer Oberfläche der Basisschicht ist die peelfähige Deckschicht aufgebracht, auf der anderen Oberfläche der Basisschicht ist eine HomopolymerZwischenschicht aufgebracht, welche von einer Copolymer-Deckschicht abgedeckt ist.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 5 bis 200 μm, wobei 10 bis 100 μm, insbesondere 20 bis 80 μm, bevorzugt sind.

Die Dicke der gegebenenfalls vorhandenen Zwischenschicht/en beträgt jeweils unabhängig voneinander 2 bis 12 μm, wobei Zwischenschichtdicken von 3 bis 8 μm, insbesondere 3 bis 6 μm, bevorzugt sind. Die angegebenen Werte beziehen sich jeweils auf eine Zwischenschicht.

Die Dicke der peelfähigen Deckschicht/en wird unabhängig von anderen Schichten gewählt und liegt bevorzugt im Bereich von 0,5 bis 10 μm, insbesondere 0,6 bis 5 μm, vorzugsweise 0,8 bis 3 μm, wobei beidseitig aufgebrachte Deckschichten bezüglich Dicke und Zusammensetzung gleich oder verschieden sein können.

Die gegebenenfalls vorhandene andere Deckschicht hat eine Dicke von 0,1 bis 5 μm, vorzugsweise 0,2 bis 1 μm, insbesondere 0,3 bis 0,5 μm.

Die Basisschicht ist im Sinne der vorliegenden Erfindung diejenige Schicht, welche mehr als 50 % der Gesamtdicke der Folie ausmacht. Ihre Dicke ergibt sich aus der Differenz von Gesamtdicke und der Dicke der aufgebrachten Deck-und Zwischenschicht/en und kann daher analog der Gesamtdicke innerhalb weiter Grenzen variieren. Deckschichten bilden die äußerste Schicht der Folie.

Um bestimmte Eigenschaften der erfindungsgemäßen Polypropylenfolie noch weiter zu verbessern, können sowohl die Basisschicht als auch die Zwischenschicht/en und die Deckschicht/en Zusätze in einer jeweils wirksamen Menge enthalten, vorzugsweise Kohlenwasserstoffharz und/oder Antistatika und/oder Antiblockmittel und/oder Gleitmittel und/oder Stabilisatoren und/oder Neutralisationsmittel, die mit den Polymeren der Kernschicht und der Deckschicht/en verträglich sind, mit Ausnahme der in der Regel unverträglichen Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt der/den Basis- und/oder Zwischenschicht/en zugesetzt. Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Der Anteil des Harzes liegt in einem Bereich von 1 bis 30 Gew.-%, vorzugsweise 2 bis 10 Gew.-%. Der Erweichungspunkt des Harzes liegt zwischen 100 und 180 °C (gemessen nach DIN 1995-U4, entspricht ASTM E-28), vorzugsweise über 120 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in den Zwischenschichten eingesetzt.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,7 Gew.-%. Für die vorliegende Erfindung ist es insbesondere bevorzugt, der/den Deckschichten tertiäre aliphatische Amine in einer Menge von 0,4 bis 0,6 Gew.-% zuzusetzen. ®Armostat 600 ist ein besonders bevorzugtes Antistatikum.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2$/s.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Die Antiblockmittel werden bevorzugt der/den Deckschicht/en zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 7 Gew.-%, vorzugsweise 0,5 bis 5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2$/g und/oder Dihydrotalcit.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gegebenenfalls biaxial gestreckt (orientiert), die gegebenenfalls biaxial gestreckte Folie thermofixiert und gegebenenfalls an der zur Coronabehandlung vorgesehenen Oberflächenschicht entsprechend flammbehandelt wird.

Die biaxiale Streckung (Orientierung) ist bevorzugt und kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 110 bis 150 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 140 °C, vorzugsweise im Bereich von 125 bis 135 °C, und die Querstreckung bei einer Temperatur größer 140 °C, vorzugsweise bei 145 bis 160 °C, durchgeführt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäße Mehrschichtfolie zeichnet sich durch eine gute Siegelnahtfestigkeit und gute Hot-Tack-Eigenschaften aus. Gleichzeitig läßt sich die Folie hervorragend peelen. Überraschenderweise kommt es dabei nicht zur Delaminierung einzelner Folienschichten oder zum Einreißen der Folie. Es wurde gefunden, daß diese Delaminierungsbeständigkeit jedoch nur dann gegeben ist, wenn alle Schichten der Folien, insbesondere die opake Schicht, im wesentlichen vakuolenfrei sind, d. h. die Dichte der Folie größer als 0,85 g/cm$^3$, bevorzugt größer 0,90 g/cm$^3$, ist. Besonders bevorzugt sind Ausführungsformen mit einer Dichte von 0,92 bis 1,0 g/cm$^3$.

Ferner verfügt die Folie über eine niedrige Lichtdurchlässigkeit im Bereich der UV-Strahlung von 200 bis 380 nm. Sie liegt unterhalb von 5 %, bevorzugt unterhalb von 2 % und ist für die Verpackung lichtempfindlicher Lebensmittel wie z. B. Molkereiprodukte unabdingbar.

Wichtig ist ferner eine niedrige Siegelanspringtemperatur, um hitzeempfindliche Lebensmittel schonend verpacken zu können. Der Peelrohstoff sollte daher gegen sich selbst bei einer Temperatur unterhalb von 130 °C, bevorzugt unterhalb von 115 °C, siegeln.

Es wurde gefunden, daß die peelfähige Deckschicht nicht nur gegen sich selbst und gegen übliche siegelfähige Deckschichten aus Propylenco- und/oder -terpolymeren siegelt. Überraschenderweise läßt sich die Folie auch sehr gut gegen Oberflächen aus Propylenhomopolymeren siegeln, welche selbst weder gegen sich selbst noch gegen übliche Siegelschichten gesiegelt werden können. Damit ist es möglich, die erfindungsgemäße Folie als Deckelverschluß für Behältnisse aus Propylenhomopolymer zu verwenden und somit Einstoffverpackungen aus Polypropylen auch bei Behältnissen mit Deckelverschlüssen wie Joghurtbecher usw. anzubieten.

Die Erfindung wird nunmehr durch die nachfolgenden Beispiele erläutert.

**Beispiel 1**

Nach dem Coextrusionsverfahren wurde aus einer Breitschlitzdüse bei einer Extrusionstemperatur von 260 °C als Summe eine Vierschichtfolie mit einem Schichtaufbau ABCD extrudiert, d. h. die Basisschicht B war von der Deckschicht A und der Zwischenschicht C umgeben. Auf die Zwischenschicht C wurde die Deckschicht D extrudiert. Die Deckschicht D wurde coronabehandelt.

Die wesentlichen Komponenten der Basisschicht B waren:

92,85 Gew.-%  Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735);

7,15 Gew.-%  $TiO_2$ über Masterbatch ®P 8555 LM, Lieferant Firma Schulman GmbH, Hüttenstraße 211, D-54578 Kerpen.

Die Zwischenschicht C bestand aus

100 Gew.-%  Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735);

Die Deckschicht der A-Seite bestand aus einer Mischung zweier Komponenten, einem Copolymer aus Ethylen- und Propylen-Einheiten mit einem Ethylengehalt von 5,1 Gew.-%, bezogen auf das Copolymer, und einem Schmelzpunkt von 129 °C sowie einem PE mit einem Schmelzpunkt von 112 °C nach DSC-Messung. Der Anteil des PE an der Zusammensetzung der Deckschicht betrug 45 Gew.-%. Diese Mischung ist als Blend ®Novolen VP 9201 von der Firma BASF erhältlich.

Die Deckschicht der D-Seite bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug. Der Deckschicht wurden 0,5 Gew.-% eines N,N-bis(2-hydroxyethyl)alkylamins (®Armostat 600) als Antistatikum und 5 Gew.-% $CaCO_3$, Typ Millicarb der Firma Omya GmbH, Köln, zugesetzt.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat. Die Basisschicht enthielt weiterhin 0,15 Gew.-% an N,N-bis(2-hydroxyethyl)-($C_{10}$-$C_{20}$)-alkylamin (®Armostat 300) als Antistatikum.

Die extrudierte Verschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

Extrusion:  Extrusionstemperatur 260 °C
Längsstreckung:  Streckwalze T = 135 °C Längsstreckung um den Faktor 6
Querstreckung:  Aufheizfelder T = 180 °C
  Streckfelder T = 177 °C
  Querstreckung um den Faktor 8
Fixierung:  Temperatur T = 155 °C
Coronabehandlung: Spannung: 10 000 V
  Frequenz: 10 000 Hz

Die so hergestellte Mehrschichtfolie wies direkt nach der Herstellung eine Oberflächenspannung von 40 bis 41 mN/m auf (D-Seite). Die Folie war ca. 26 μm dick, wobei die Dicke der A-Schicht etwa 2,1 μm, die der D-Schicht etwa 0,5 μm, die der Zwischenschicht C ca. 8 μm und die der Basisschicht B 15,4 μm betrug.

**Beispiel 2**

Beispiel 1 wurde wiederholt. Die Dicke der A-Schicht wurde auf 1,3 μm abgesenkt. Die Dicke der Folie betrug ca. 25,2 μm.

**Vergleichsbeispiel**

Nach dem Coextrusionsverfahren wurde aus einer Breitschlitzdüse bei einer Extrusionstemperatur von 260 °C als Summe eine Vierschichtfolie mit einem Schichtaufbau ABCD extrudiert, d. h. die Basisschicht B war von der Deckschicht A und der Zwischenschicht C umgeben. Die Deckschicht D wurde coronabehandelt.

Die wesentlichen Komponenten der Basisschicht waren:

92,6 Gew.-% Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735);

4,2 Gew.-% $CaCO_3$ des Typs ®Omyalithe 90T, Lieferant für Masterbatche Firma Multibase, Z.I. du Giers, F-38380 Saint-Laurent-du-Pont, Frankreich;

3,2 Gew.-% $TiO_2$ über Masterbatch ®P 8555 LM, Lieferant Firma Schulman GmbH, Hüttenstraße 211, D-54578 Kerpen.

Die Zwischenschicht C bestand aus

100 Gew.-% Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735);

Die Deckschicht der A-Seite bestand aus einer Mischung zweier Komponenten, nämlich Copolymer aus Ethylen- und Propylen-Einheiten mit einem Ethylengehalt von 5,1 Gew.-%, bezogen auf das Copolymer, und einem Schmelzpunkt von 129 °C sowie einem PE mit einem Schmelzpunkt von 112 °C nach DSC-Messung. Der Anteil des PE an der Zusammensetzung der Deckschicht betrug 45 Gew.-%. Diese Mischung ist als Blend ®Novolen VP9201 von der Firma BASF erhältlich.

Die Deckschicht der D-Seite bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug. Der Deckschicht wurden 0,5 Gew.-% eines N,N-bis(2-hydroxyethyl)alkylamins (®Armostat: 600) als Antistatikum und 5 Gew.-% $CaCO_3$, Typ Millicarb der Firma Omya GmbH, Köln, zugesetzt.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat. Die Basisschicht enthielt weiterhin 0,15 Gew.-% an N,N-bis(2-hydroxyethyl)-($C_{10}$-$C_{20}$)-alkylamin (®Armostat 300) als Antistatikum.

Die extrudierte Vierschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

Extrusion: Extrusionstemperatur 260 °C
Längsstreckung: Streckwalze T = 135 °C
Längsstreckung um den Faktor 6
Querstreckung: Aufheizfelder T = 180 °C
Streckfelder T = 177 °C
Querstreckung um den Faktor 8
Fixierung: Temperatur T = 155 °C
Coronabehandlung: Spannung: 10 000 V
Frequenz: 10 000 Hz

Die so hergestellte Mehrschichtfolie wies direkt nach der Herstellung eine Oberflächenspannung von 40 bis 41 mN/m auf (D-Seite). Die Folie war ca. 26 μm dick, wobei die Dicke der A-Schicht etwa 2,1 μm, die der D-Schicht etwa 0,5 μm, die der Zwischenschicht C ca. 8 μm und die der Basisschicht B 15,4 μm betrug.

Anwendungstechnische Ausprüfung

Siegelung auf PP-Becher

Die Siegelung erfolgte auf einem Gasti-Gerät unter folgenden Bedingungen:

Siegelzeit:       1 s
Temperatur:     150 °C
Druck:            6 bar

Die Peelbarkeit wurde durch Aufziehen der Peelnähte beurteilt, die Nahtfestigkeit mittels Druckbelastung - Druckausübung auf den Deckel - ermittelt.

Zur Ermittlung der Dichtigkeit - speziell gegenüber Flüssigkeiten - wurden mit Wasser gefüllte PP-Becher hergestellt und diese geschüttelt bzw. auf dem Deckel gelagert.

Zur Charakterisierung der Rohstoffe und der Folien wurden die folgenden Meßmethoden benutzt:

Mittleres Molekulargewicht und Molmassen-Dispersität

Die mittleren Molmassen ($M_w$, $M_n$) und die mittlere Molmassen-Dispersität ($M_w$/$M_n$) wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (~ 135 °C) durchgeführt.

Viskositätszahl

Die Bestimmung der Viskositätszahl wird nach DIN 53 728, Blatt 4, durchgeführt.

Schmelzflußindex

Der Schmelzflußindex wurde nach DIN 53 735 bei 21,6 N Belastung und 230 °C gemessen.

Schmelzpunkte

DSC-Messung, Maxima der Schmelzkurve, Aufheizgeschwindigkeit 20 °K/min.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit und Peelfestigkeit

Zur Bestimmung wurden zwei 15 mm breite Folienstreifen übereinandergelegt und bei 130 °C, einer Siegelzeit von 0,5 s und einem Siegeldruck von 10 N/mm$^2$ (Gerät: Brugger Typ NDS, einseitig beheizte Siegelbacke) versiegelt. Die Siegelnahtfestigkeit wurde nach der T-Peel-Methode bestimmt.

Zur Bestimmung der Siegelnahtfestigkeit gegenüber Homopolymeren wird die Peelschicht in einer Breite von 15 mm gegen eine nicht coronabehandelte Folie von 25 µm Dicke mit homopolymeren Deckschichten gesiegelt, wobei eine Temperatur von 150 °C, ein Anpreßdruck von 6 bar und eine Siegelzeit von 1 s gewählt wurde. Die Bestimmung der Peelfestigkeit erfolgt nach der T-Peelmethode.

Dichte

Die Dichte wird nach DIN 53 479, Verfahren A, bestimmt.

Hot-Tack

"Hot-Tack" bezeichnet die Festigkeit einer noch heißen Siegelnaht unmittelbar nach dem Öffnen der Siegelwerkzeuge. Zur Bestimmung werden zwei Folienzuschnitte von 5 • 30 mm übereinandergelegt und an den Enden mit einem Kammergewicht G von 100 g fixiert. Ein Flachspatel wird zwischen die Folienlagen gesteckt, und der Meßstreifen wird über zwei Umlenkrollen zwischen die Siegelbacken geführt. Anschließend wird die Siegelung ausgelöst, wobei der Spatel zwischen den Lagen herausgezogen wird, sobald die Siegelbacken geschlossen sind. Als Siegelbedingungen werden 150 °C für die Siegeltemperatur, 0,5 s für die Siegelzeit und 30 N/cm$^2$ für den Anpreßdruck eingestellt. Nach Ende der Siegelzeit von 0,5 s öffnen sich die Siegelbacken (Fläche: 20 cm$^2$) selbständig, und der gesiegelte Meßstreifen wird durch das Belastungsgewicht ruckartig bis zur Umlenkrolle vorgezogen und dabei unter einem Trennwinkel von 180° gespalten. Als Hot-Tack wird die Tiefe der Delaminierung der Siegelnaht in mm angegeben, die sie bei der vorgegebenen Krafteinwirkung erfährt.

Oberflächenspannung

Die Oberflächenspannung wurde mittels der sogenannten Tintenmethode (DIN 53 364) bestimmt.

Druckfarbenhaftung/Metallhaftung

Die coronabehandelten Folien wurden 14 Tage nach ihrer Produktion (Kurzzeitbeurteilung) bzw. 6 Monate nach ihrer Produktion (Langzeitbeurteilung) bedruckt bzw. metallisiert. Die Farb- bzw. Metallhaftung wurde mittels Klebebandtest beurteilt. Konnte mittels Klebeband keine Farbe bzw. kein Metall abgelöst werden, so wurde die Haftung mit sehr gut und bei deutlicher Ablösung von Farbe bzw. Metall mit schlecht beurteilt.

Bestimmung der Siegelanspringtemperatur

Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Ethylengehalt

Der Ethylengehalt des Peelrohstoffs wurde mittels IR-Spektroskopie bestimmt. Hierbei wurden an ca. 350 μm dicken Preßplatten die Extinktion pro mm bei 732 cm$^{-1}$ gemessen. Die Zuordnung der Extinktion pro mm zu Ethylengehalten wurde mit Hilfe einer Eichkurve vorgenommen, welche auf $^{13}$C-NMR-Daten basiert.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichtdurchlässigkeit

Die Lichtdurchlässigkeit wird in Anlehnung an ASTM-D 1003-77 gemessen.
In der nachstehenden Tabelle sind die Eigenschaften der Mehrschichtfolien der Beispiele zusammengefaßt.

TABELLE

| (Folieneigenschaften) | | | |
|---|---|---|---|
| | Beispiel 1 | Beispiel 2 | Vergleichsbeispiel |
| Dicke [$\mu$m] | 26 | 25,2 | 26 |
| Dichte [g/cm$^3$] | 0,95 | 0,95 | 0,78 |
| Opazität | 58 | 57 | 65 |
| Siegelung A/A | 4,2 | 2,9 | 1,9[1] |
| Siegelung D/D | 3,4 | 3,4 | 3,2 |
| Entstapelbarkeit | + | + | + |
| Festigkeit der Siegelung gegen PP | 1,8 | 1,2 | 1,1[1] |
| Dichtigkeit der Becher | + | + | - |
| Peelbarkeit | + | + | -[1] |

[1] Delaminierung und Einreißen der Folie

**Patentansprüche**

1. Peelfähige, orientierte, opake Polyolefin-Mehrschichtfolie aus mindestens einer opaken Schicht und einer peelfähigen Deckschicht, dadurch gekennzeichnet, daß alle Schichten der Folie vakuolenfrei sind und die opake Schicht Pigmente mit einem mittleren Teilchendurchmesser von 0,01 bis 1 $\mu$m enthält.

2. Mehrschichtfolie nach Anspruch 1, dadurch gekennzeichnet, daß die opake Schicht der Folie Polyolefin, vorzugsweise Polypropylen, in einer Menge von mindestens 50 Gew.-%, vorzugsweise 75 bis 100 Gew.-%, bezogen auf das Gewicht der opaken Schicht, enthält.

3. Mehrschichtfolie nach Anspruch 1 und/oder 2, dadurch gekennzeichnet, daß die opake Schicht der Mehrschichtfolie opazifierende Pigmente in einer Menge von maximal 40 Gew.-%, vorzugsweise 1 bis 30 Gew.-%, enthält.

4. Mehrschichtfolie nach einem oder mehreren der Ansprüche 1 bis 3, dadurch gekennzeichnet, daß die Pigmente einen mittleren Teilchendurchmesser von vorzugsweise 0,01 bis 0,7 $\mu$m, insbesondere 0,01 bis 0,4 $\mu$m, haben.

5. Mehrschichtfolie nach einem oder mehreren der Ansprüche 1 bis 4, dadurch gekennzeichnet, daß die Pigmente $TiO_2$ und/oder $CaCO_3$ und/oder $BaSO_4$ und/oder $SiO_2$ sind.

6. Mehrschichtfolie nach einem oder mehreren der Ansprüche 1 bis 5, dadurch gekennzeichnet, daß die peelfähige Deckschicht im wesentlichen eine Mischung aus zwei unverträglichen Polymeren (Komponente I und II) enthält.

7. Mehrschichtfolie nach einem oder mehreren der Ansprüche 1 bis 6, dadurch gekennzeichnet, daß die Komponente I

ein Propylenhomopolymer oder
ein Copolymer von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymer von

Ethylen und Propylen und Butylen oder

Ethylen und Propylen und einem anderen α-Olefin mit 5 bis 10 Kohlenstoffatomen oder

eine Mischung aus zwei oder mehreren der genannten Homo-, Co- und Terpolymeren oder

ein Blend aus zwei oder mehreren der genannten Homo-, Co- und Terpolymeren, gegebenenfalls gemischt mit einem oder mehreren der genannten Homo-, Co- und Terpolymeren.

ist.

8. Mehrschichtfolie nach einem oder mehreren der Ansprüche 1 bis 7, dadurch gekennzeichnet, daß die Komponente II ein unverträgliches Polymer, vorzugsweise ein HDPE, MDPE, LDPE, LLDPE, VLDPE, ist.

9. Mehrschichtfolie nach einem oder mehreren der Ansprüche 1 bis 8, dadurch gekennzeichnet, daß die Mischung aus den beiden unverträglichen Polymeren zwei separate Schmelzpeaks aufweist, wobei der erste Schmelzpeak im Bereich von 105 bis 135 °C und der zweite Schmelzpeak im Bereich von 120 bis 140 °C liegt.

10. Mehrschichtfolie nach einem oder mehreren der Ansprüche 1 bis 9, dadurch gekennzeichnet, daß die opake Schicht die Basisschicht der Folie ist.

11. Mehrschichtfolie nach einem oder mehreren der Ansprüche 1 bis 10, dadurch gekennzeichnet, daß die Mehrschichtfolie aus vier Schichten besteht, wobei auf einer Oberfläche der opaken Basisschicht die peelfähige Deckschicht und auf der anderen Oberfläche der opaken Basisschicht eine Zwischenschicht aufgebracht ist, die im wesentlichen aus Propylenhomopolymer besteht, und auf der Zwischenschicht eine Deckschicht aufgebracht ist, die im wesentlichen aus Propylencopolymeren und/oder Propylenterpolymeren oder einem peelfähigen Polymeren besteht.

12. Mehrschichtfolie nach einem oder mehreren der Ansprüche 1 bis 10, dadurch gekennzeichnet, daß die Mehrschichtfolie aus fünf Schichten besteht, wobei auf beiden Oberflächen der opaken Basisschicht Zwischenschichten aufgebracht sind, die im wesentlichen aus Propylenhomopolymer bestehen, und auf jeder Zwischenschicht eine Deckschicht aufgebracht ist, wobei mindestens eine der beiden Deckschichten peelfähig ist.

13. Mehrschichtfolie nach einem oder mehreren der Ansprüche 1 bis 12, dadurch gekennzeichnet, daß die peelfähige Deckschicht 0,5 bis 5 μm dick ist und die andere Deckschicht, welche auf der Zwischenschicht aufgebracht ist, 0,1 bis 0,5 μm dick ist.

## Claims

1. A peelable, orientated multi-layer polyolefin film consisting of at least one opaque layer and one peelable outer layer, characterised in that all layers of the film are vacuole-free, the opaque layer containing pigments with a mean particle diameter of 0.01 to 1 μm.

2. A multi-layer film according to claim 1, characterised in that the opaque layer of the film contains polyolefin, preferably polypropylene, in an amount of at least 50% by weight, preferably 75 to 100% by weight in relation to the weight of the opaque layer.

3. A multi-layer film according to claim 1 and/or 2, characterised in that the opaque layer of the multi-layer film contains opacifying pigments in an amount of not more than 40% by weight and preferably 1 to 30% by weight.

4. A multi-layer film according to one or more of claims 1 to 3, characterised in that the pigments have a mean particle diameter of preferably 0.01 to 0.7 μm and in particular 0.01 to 0.4 μm.

5. A multi-layer film according to one or more of claims 1 to 4, characterised in that the pigments are $TiO_2$ and/or $CaCO_3$ and/or $BaSO_4$ and/or $SiO_2$.

6. A multi-layer film according to one or more of claims 1 to 5, characterised in that the peelable outer layer contains substantially one mixture of two incompatible polymers (components I and II).

7. A multi-layer film according to one or more of claims 1 to 6, characterised in that the component I is

a propylene homopolymer or

a copolymer of

    ethylene and propylene or
    ethylene and butylene or
    propylene and butylene or
    ethylene and another $\alpha$-olefin with 5 to 10 carbon atoms or
    propylene and another $\alpha$-olefin with 5 to 10 carbon atoms or

a terpolymer of

    ethylene and propylene and butylene or
    ethylene and propylene and another $\alpha$-olefin with 5 to 10 carbon atoms or

a mixture of two or more of the said homo-, co- and terpolymers or
a blend of two or more of the said homo-, co- and terpolymers, possibly mixed with one or more of the said homo-, co- and terpolymers.

8. A multi-layer film according to one or more of claims 1 to 7, characterised in that the component II is an incompatible polymer, preferably an HDPE, MDPE, LDPE, LLDPE, VLDPE.

9. A multi-layer film according to one or more of claims 1 to 8, characterised in that the mixture of the two incompatible polymers has two separate melting peaks, the first melting peak being in the range from 105 to 135°C and the second melting peak in the range from 120 to 140°C.

10. A multi-layer film according to one or more of claims 1 to 9, characterised in that the opaque layer is the base layer of the film.

11. A multi-layer film according to one or more of claims 1 to 10, characterised in that the multi-layer film consists of four layers, the peelable outer layer being applied to one surface of the opaque base layer while an intermediate layer is applied to the other surface of the opaque base layer, the said intermediate layer consisting substantially of propylene homopolymer and in that there is applied to the intermediate layer an outer layer which consists substantially of propylene copolymers and/or propylene terpolymers or a peelable polymer.

12. A multi-layer film according to one or more of claims 1 to 10, characterised in that the multi-layer film consists of five layers, whereby there are applied to both surfaces of the opaque base layer intermediate layers which consist substantially of propylene homopolymer and in that an outer layer is applied to each intermediate layer, at least one of the two outer layers being peelable.

13. A multi-layer film according to one or more of claims 1 to 12, characterised in that the peelable outer layer is 0.5 to 5 $\mu$m thick and the other outer layer, which is applied to the intermediate layer, is 0.1 to 0.5 $\mu$m thick.

**Revendications**

1. Feuille multicouche en polyoléfine opaque, orientée, pelliculable, constituée par au moins une couche opaque et par une couche de recouvrement pelliculable, caractérisée en ce que toutes les couches de la feuille sont exemptes de vacuoles et la couche opaque contient des pigments possédant un diamètre moyen des particules de 0,01 à 1 $\mu$m.

2. Feuille multicouche selon la revendication 1, caractérisée en ce que la couche opaque de la feuille contient une polyoléfine, de préférence du polypropylène, en une quantité d'au moins 50% en poids, de préférence de 75 à 100% en poids rapportés au poids de la couche opaque.

3. Feuille multicouche selon les revendications 1 et/ou 2, caractérisée en ce que la couche opaque de la feuille multicouche contient des pigments opacifiants en une quantité maximale de 40% en poids, de préférence de 1 à 30% en poids.

4. Feuille multicouche selon une ou plusieurs des revendications 1 à 3, caractérisée en ce que les pigments possèdent un diamètre moyen des particules de préférence de 0,01 à 0,7 μm, en particulier de 0,01 à 0,4 μm.

5. Feuille multicouche selon une ou plusieurs des revendications 1 à 4, caractérisée en ce que les pigments représentent du $TiO_2$ et/ou du $CaCO_3$ et/ou du $BaSO_4$ et/ou du $SiO_2$.

6. Feuille multicouche selon une ou plusieurs des revendications 1 à 5, caractérisée en ce que la couche de recouvrement pelliculable contient essentiellement un mélange de deux polymères incompatibles (composants I et II).

7. Feuille multicouche selon une ou plusieurs des revendications 1 à 6, caractérisée en ce que le composant I représente

un homopolymère de propylène ou
un copolymère

d'éthylène et de propylène ou
d'éthylène et de butylène ou
de propylène et de butylène ou
d'éthylène et d'une autre α-oléfine contenant de 5 à 10 atomes de carbone ou
de propylène et d'une autre α-oléfine
contenant de 5 à 10 atomes de carbone ou

un terpolymère

d'éthylène et de propylène et de butylène ou
d'éthylène et de propylène et d'une autre α-oléfine contenant de 5 à 10 atomes de carbone ou

un mélange de deux des homopolymères, des copolymères et des terpolymères mentionnés ou plus ou encore
un mélange homogène de deux des homopolymères, des copolymères et des terpolymères mentionnés ou plus, le cas échéant en mélange avec un ou plusieurs des homopolymères, des copolymères et des terpolymères mentionnés.

8. Feuille multicouche selon une ou plusieurs des revendications 1 à 7, caractérisée en ce que le composant II représente un polymère incompatible, de préférence un HDPE, un MDPE, un LDPE, un LLDPE, un VLDPE.

9. Feuille multicouche selon une ou plusieurs des revendications 1 à 8, caractérisée en ce que le mélange des deux polymères incompatibles présente deux pics de fusion séparés, le premier pic de fusion se situant dans le domaine de 105 à 130°C et le second pic de fusion se situant dans le domaine de 120 à 140°C.

10. Feuille multicouche selon une ou plusieurs des revendications 1 à 9, caractérisée en ce que la couche opaque représente la couche de base de la feuille.

11. Feuille multicouche selon une ou plusieurs des revendications 1 à 10, caractérisée en ce que la feuille multicouche est constituée par quatre couches, la couche de recouvrement pelliculable étant appliquée sur une surface de la couche de base opaque et une couche intermédiaire étant appliquée sur l'autre surface de la couche de base opaque, qui est constituée essentiellement d'un homopolymère de propylène, et une couche de recouvrement étant appliquée sur la couche intermédiaire, qui est constituée d'un copolymère de propylène et/ou d'un terpolymère de propylène ou encore d'un polymère pelliculable.

12. Feuille multicouche selon une ou plusieurs des revendications 1 à 10, caractérisée en ce que la feuille multicouche est constituée par cinq couches, des couches intermédiaires étant appliquées sur les deux surfaces de la couche de base opaque, qui sont constituées essentiellement d'un homopolymère de propylène, et une couche de recouvrement étant appliquée sur chaque couche intermédiaire, au moins une des deux couches de recouvrement étant pelliculable.

13. Feuille multicouche selon une ou plusieurs des revendications 1 à 12, caractérisée en ce que la couche de recouvrement pelliculable possède une épaisseur de 0,5 à 5 μm et l'autre couche de recouvrement, qui est appliquée sur la couche intermédiaire, possède une épaisseur de 0,1 à 0,5 μm.